# EUROPEAN PATENT APPLICATION

(11) **EP 1 298 900 A1**
(43) Date of publication of application: **02.04.2003**
(21) Application number: 02021116.5
(22) Date of filing: 23.09.2002
(51) Int. Cl.: H04M 3/42, H04M 1/725

(54) **Telephony call control using a personal digital assistant with a wireless link**

(30) Priority: 28.09.2001 US 967241
(71) Applicant: Siemens Information and Communication Networks Inc., Boca Raton, FL 33487-3587 (US)
(72) Inventor: Ming, Chao, Boca Raton, FL 33498 (US); Cross, Kenton, Boca Raton, FL 33485 (US); Faramarz, Sahim, Boca Raton, FL 33433 (US); Leroy, Gilbert, Wellington, FL 33414 (US)
(74) Representative: Epping Hermann & Fischer

(57) **Abstract**

A server computer coupled to a CTI capable telephone or a Teleworking Server coupled to a PBX is also coupled to a wireless gateway/router and is provided with communications software. A personal digital assistant with wireless capabilities or a cell phone with computing capabilities is provided with corresponding communications software for communicating via the wireless network with the server. The server monitors one or more phone numbers associated with each client. When a call comes in, the server immediately notifies the client. The client can direct the server to transfer the call to a nearby phone. This can be accomplished by parking the call in a system slot and by retrieving the call with a nearby desk phone, thus not needing to know the number of the desk phone. Otherwise, the client can have the call forwarded to another telephone number. The client can also redirect the call to voicemail or a personal messaging system.

## Description

### BACKGROUND OF THE INVENTION

### 1. Field of the Invention

The invention relates to telephony call control and to personal digital assistants (PDAs). More particularly, the invention relates to methods and apparatus for telephony call control using a personal digital assistant with a wireless link and providing a mechanism by which a wireless phone and PDA device may operate in a coordinated way to provide complex telephony features.

### 2. Brief Description of the Prior Art

For many years now it has been common to control a telephone system with a personal computer. This technology is known as computer telephone integration or CTI. Typical applications include speed dialing, caller identification, call forwarding, voice mail, interactive voice response, etc.

In order for a worker to take advantage of these features, the worker needs a computer coupled to a telephone or a PBX and the appropriate software. This is usually not a problem for a worker who spends the majority of the workday at the same desk or work station. Certain types of work, however, require that the worker move about frequently. For example, medical workers in a hospital, law enforcement workers, retail sales supervisors, etc. all need to move about frequently. Communications with mobile workers such as these is effected with wireless devices such as pagers and cell phones. However, these devices do not offer the flexibility of CTI.

Recently personal digital assistants have been provided with wireless capabilities and some cell phones have been provided with features of personal digital assistants.

### SUMMARY OF THE INVENTION

It is therefore an object of the invention to provide a CTI application which serves the mobile worker by extending the features of a typical PBX to the user of a cell-phone and PDA.

It is also an object of the invention to provide a wireless device which has CTI capabilities.

It is another object of the invention to provide a low cost CTI solution for the mobile worker.

It is yet another object of the invention to provide a CTI solution of the mobile worker which is easy to implement.

It is another object of the invention to provide a system for a mobile worker to control telephone calls in real time.

It is still another object of the invention to provide a CTI system which is rich in features.

It is yet another object of this invention to provide a system wherein a cell phone is used in conjunction with a PDA to replace the functionality of a handset and desktop display and button array.

In accord with these objects which will be discussed in detail below, a first preferred embodiment of the invention includes a computer coupled to a CTI capable telephone and wireless gateway/router, and a personal digital assistant with wireless capabilities or a cell phone with computing capabilities. The computer is programmed with CTI software and with mobility server software. The personal digital assistant with wireless capabilities or cell phone with computing capabilities is programmed with mobility client software which allows it to interface with the CTI application running on the computer.

A second preferred embodiment of the invention includes a mobility server coupled to a PBX and to a wireless gateway/router, and a personal digital assistant with wireless capabilities or a cell phone with computing capabilities. The mobility server uses a call control API or "fictitious telephone interface" to provide the server function for multiple users. In particular, the mobility server controls multiple remote port H.323 clients and virtual H.323 clients.

The clients and the server preferably communicate via a wireless IP network, either LAN or WAN. In either case, the wireless link need not be broad band since only short messages will be transmitted. In the case of a LAN, IEEE 802.11b wireless networking may be a cost effective solution. In the case of a WAN, data services such as CDPD or GPRS which are part of the digital cellular network may provide the best solution.

According to the invention, the server monitors one or more phone numbers associated with each client. When a call comes in, the server immediately notifies the client, preferably by including caller identification. The client then has several options. The client can direct the server to transfer or forward the call to a nearby desk phone. This can also be accomplished by parking the call in a system slot and by retrieving the call with a nearby desk phone, thus not needing to know the number of the desk phone. Otherwise, the client can have the call forwarded to another telephone number. The client can also redirect the call to voicemail or a personal messaging system.

### BRIEF DESCRIPTION OF THE DRAWINGS

FIG. 1 is a high level block diagram of a first preferred embodiment of the invention;

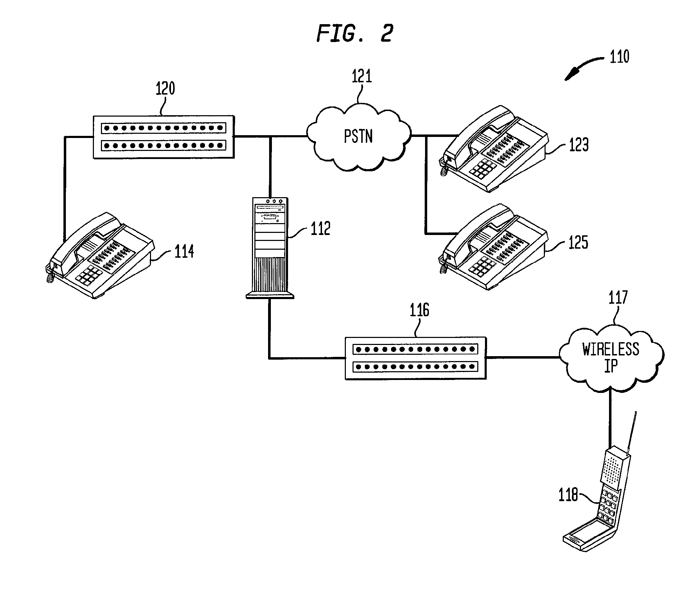

FIG. 2 is a high level block diagram of a second preferred embodiment of the invention;
FIG. 3 is a high level flow chart illustrating the basic functions of the invention;
FIG. 4 is a sample screen display on a personal digital assistant illustrating the information and options presented to the mobile worker; and
FIG. 5 is a sample screen display on a personal digital assistant after one of the options for call processing has been chosen.

### DETAILED DESCRIPTION

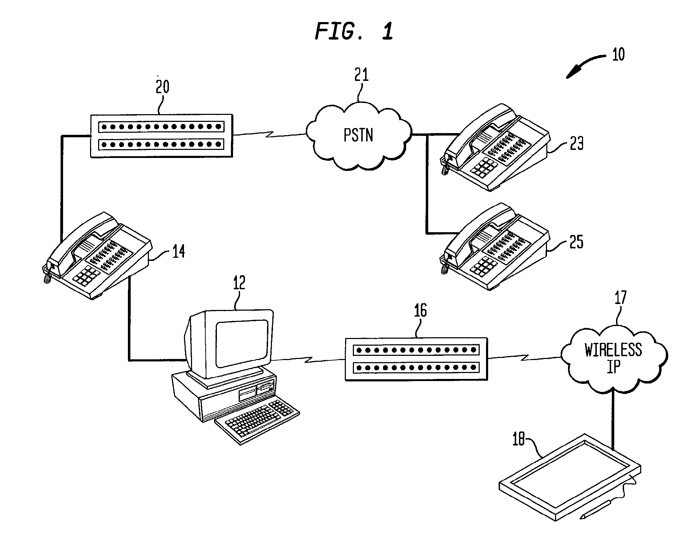

Turning now to Figure 1, a first preferred embodiment of a system 10 according to the invention includes a computer 12 coupled to a CTI capable telephone 14 and wireless gateway/router 16, and a personal digital assistant 18 with wireless capabilities or a cell phone with "always-on" wireless data and computing capabilities (not shown). In this example, the telephone 14 is coupled to a PBX 20 which is coupled to the PSTN 21 which services other subscribers, e.g. 23 and 25. The personal digital assistant 18 is coupled to the computer 12 by a wireless network 17 created by the wireless gateway/router 16. The connection between the computer 12 and the CTI capable phone 14 is preferably via a serial link, USB (universal serial bus), or a short range wireless link such as Bluetooth.

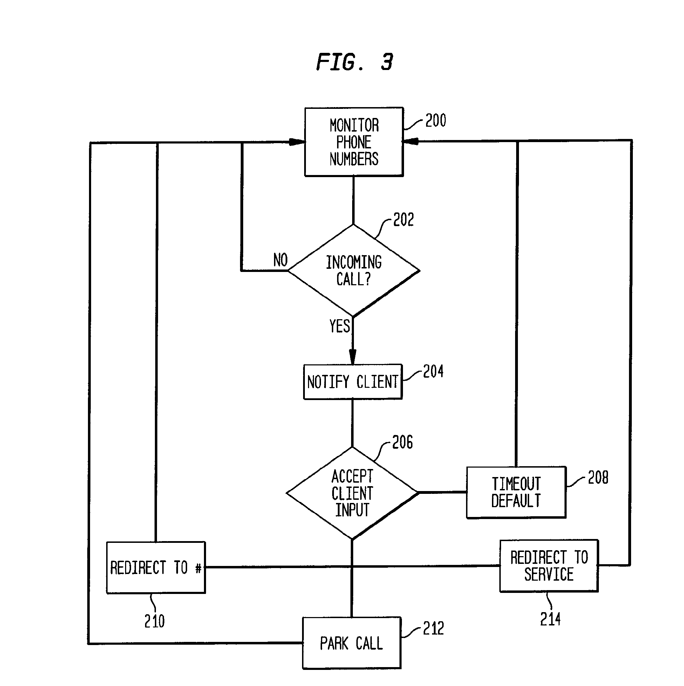

The CTI capable telephone 14 preferably includes support for caller ID, call transfer, and conference calling which are controllable by the computer 12 via a call control API. The computer 12 is equipped with CTI driver software (available from the telephone manufacturer) and with mobility server software (described in more detail below with reference to Figure 3). The personal digital assistant 18 is programmed with mobility client software which allows it to interface with the CTI application running on the computer 12. The client software is preferably written in a high level language such as C++, Java or JavaScript. The client software is a "thin client" which is essentially network communication software which extends the user interface of the CTI application running on the server computer 12.

A second preferred embodiment of a system 110 according to the invention includes a mobility server 112 coupled to a PBX 120 and to a wireless gateway/router 116, and a personal digital assistant (not shown) with wireless capabilities or a cell phone 118 with "always-on" wireless data and computing capabilities. The mobility server 112 uses a call control API or "fictitious telephone interface" to provide the server function for multiple users. In particular, the mobility server 112 controls multiple remote port H.323 clients and virtual H.323 clients. According to a preferred embodiment, the server 112 is preferably a Siemens HiPath™ Teleworking Server. In this example, the PBX 120 is also coupled to the PSTN 121 which services other subscribers, e.g. 123 and 125.

In either of the preferred embodiments described above, the cell phone 18 or 118 may be replaced with a combination device (not shown) comprising a PDA (not shown) and a cell phone 18 or 118. In such a combination device, the PDA and cell phone may be physically integrated, yet logically operating separately. If a PDA is used in conjunction with a cell phone (whether or not they are physically integrated), the PDA and cell phone may communicate, for example by way of call control API or Bluetooth, to provide additional functionality, such as using the PDA to provide greater control over the cell phone's features. Examples of such features that could be controlled by the PDA are the cell phone speakerphone and volume control.

The server 112 preferably includes support for caller ID, call transfer, and conference calling which are controllable by the API of the server 112. The cell phone 118 with computer capability is programmed with mobility client software which allows it to interface with the server 112. The client software is a "thin client" which is preferably written in a high level language such as C++, Java or JavaScript. The client software is essentially network communication software which extends the user interface of the server 112. The communication protocol between the client and server is designed so that the same client may interface to either preferred embodiment of the server.

The clients 118 and the server 112 preferably communicate via a wireless IP network 117, either LAN or WAN. In either case, the wireless link need not be broad band or "voice quality" since only occasional short messages will be transmitted. High degrees of jitter and delay can be tolerated. TCP protocol is used to ensure no loss of messages. In the case of a LAN, IEEE 802.11 b wireless networking may be a cost effective solution. In the case of a WAN, CDPD or GPRS data services, provided a public carrier may provide the best solution. SMDS (short message delivery service) of the digital cellular network may also provide a solution.

Turning now to Figure 3, according to a preferred embodiment of the invention, the server monitors, at 200, one or more phone numbers associated with each client. When a call comes in as determined at 202, the server immediately notifies the client at 204 via the wireless network, preferably by including caller identification information, and waits at 206 for client input. Preferably, if no client input is received within a preset time, a default action is performed at 208. The default action would likely be a redirection to a voicemail system. The client may also have a set of user defined rules that instruct how to handle calls from specific individuals, without user intervention. For example, a call from a specific number ("my boss") can be automatically be forwarded or transferred to "my current location", the most recent phone number specified by the client.

Once notified at 204, the client then has several options. As mentioned above, the notification preferably includes caller identification information so that the client can use that information to decide which option to choose in further processing the call.

One option for the client is to direct the server to transfer the call to a nearby phone. One manner of redirecting a call is to enter a phone number as shown at 210. This could also be setup as the default at 208. When a forward number is entered, the call will be placed on hold and played an announcement that the call is being transferred.

The client can also direct the server to transfer the call to any nearby phone by parking the call at 212 in a system slot and by retrieving the call with a nearby phone, thus not needing to enter or even know the number of the phone used to retrieve the call. For example, when a call is parked at 212, an announcement will be played to the caller indicating that the call is being transferred. In addition, music on hold or other audio information may be played to the caller while the client calls in to retrieve the call. When the client calls a preassigned phone number and, optionally enters the proper code, the system slot is coupled to the incoming client call and the parties are connected.

Another option available to the client is illustrated at 214 where the client can have the call redirected to voicemail or a personal messaging system.

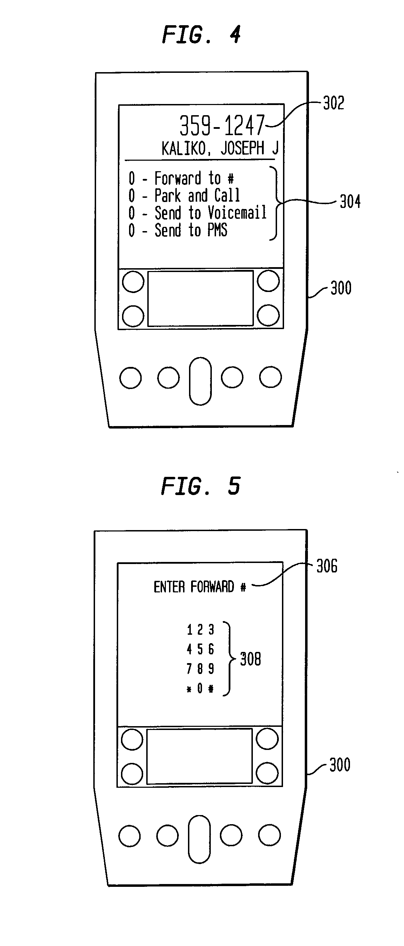

Referring now to Figures 4 and 5, those skilled in the art will recognize a typical personal digital assistant 300 having a touch screen stylus interface. According to the invention, when a call is received by the call server for this particular client, caller ID information 302 is displayed on the screen of the personal digital assistant 300 together with a menu 304 of processing options. An audible signal (not shown) is also activated. If the client chooses the "Forward to #" option, a virtual keypad 308 with an instruction prompt 306 is displayed as shown in Figure 5. The client may then enter the forward number with the stylus (not shown).

The other options "Park and Call", "Send to voicemail", and "Send to PMS" (personal messaging system) might not need further input from the client. However, if they did, an interactive screen like the one shown in Figure 5 would be provided.

There have been described and illustrated herein methods and apparatus for telephony call control using a personal digital assistant with a wireless link. While particular embodiments of the invention have been described, it is not intended that the invention be limited thereto, as it is intended that the invention be as broad in scope as the art will allow and that the specification be read likewise. It will therefore be appreciated by those skilled in the art that yet other modifications could be made to the provided invention without deviating from its spirit and scope as so claimed.

## Claims

1. A system for telephony call control, comprising:
a) a call control server coupled to one of a telephone or a PBX and coupled to a wireless network, said call control server having call control capabilities and wireless network communication capabilities; and
b) a hand held wireless device having wireless network communication capabilities, wherein
said call control server sends a message to said hand held wireless device when a call is received and responds to messages from said hand held wireless device for processing the call.

2. A system according to claim 1, wherein:
said hand held wireless device is a personal digital assistant.

3. A system according to claim 1, wherein:
said hand held wireless device is a cell phone with computing capabilities.

4. A system according to claim 1, wherein:
said call control server is a computer coupled to a telephone having CTI capabilities.

5. A system according to claim 1, wherein:
said call control server is a teleworking server coupled to a PBX.

6. A system according to claim 1, further comprising:
c) a wireless network gateway/router coupled to said call control server.

7. A system according to claim 6, wherein:
said wireless network gateway/router is a LAN wireless network gateway/router.

8. A system according to claim 6, wherein:
said wireless network gateway/router is a WAN wireless network gateway/router.

9. A system according to claim 7, wherein:
said wireless network gateway/router is an IEEE 802.11b wireless network gateway/router.

10. A system according to claim 7, wherein:
said wireless network gateway/router is an SMDS wireless network gateway/router.

11. An apparatus for use with a hand held wireless device for remote telephony call control, comprising:
a) a call control server coupled to one of a telephone or a PBX, said call control server having call control capabilities and wireless network communication capabilities; and
b) a wireless network gateway/router coupled to said call control server, wherein
said call control server sends a message to the hand held wireless device when a call is received and responds to messages from the hand held wireless device for processing the call.

12. An apparatus according to claim 11, wherein:
said call control server is a computer coupled to a telephone having CTI capabilities.

13. An apparatus according to claim 11, wherein:
said server is a teleworking server coupled to a PBX.

14. An apparatus according to claim 11, wherein:
said wireless network gateway/router is a LAN wireless network gateway/router.

15. An apparatus according to claim 11, wherein:
said wireless network gateway/router is a WAN wireless network gateway/router.

16. An apparatus according to claim 14, wherein:
said wireless network gateway/router is an IEEE 802.11b wireless network gateway/router.

17. An apparatus according to claim 15, wherein:
said wireless network gateway/router is an SMDS network wireless gateway/router.

18. An apparatus for use with a call control server coupled to one of a telephone or a PBX and coupled to a wireless network, comprising:
a hand held wireless device having wireless network communication capabilities, wherein
said hand held wireless device receives a message from the call control server when a call is received and responds to messages from the call control server for processing the call.

19. An apparatus according to claim 18, wherein:
said hand held wireless device is a personal digital assistant.

20. An apparatus according to claim 18, wherein:
said hand held wireless device is a cell phone with computing capabilities.

21. An apparatus according to claim 18, wherein:
said wireless network communication capabilities are LAN wireless network communication capabilities.

22. An apparatus according to claim 18, wherein:
said wireless network communication capabilities are WAN wireless network communication capabilities.

23. An apparatus according to claim 21, wherein:
said wireless network communication capabilities are IEEE 802.11b wireless network communication capabilities.

24. An apparatus according to claim 22, wherein:
said wireless network communication capabilities are SMDS wireless network communication capabilities.

25. A method for telephony call control, comprising the steps of:
a) coupling a call control server having call control and wireless network communication capabilities to one of a telephone or a PBX;
b) coupling said call control server to a wireless network; and
c) utilizing said call control server to:
1) send a message to a hand held wireless device having call control capabilities and wireless network communication capabilities when a call is received; and
2) respond to messages from said hand held wireless device for processing the call.

26. A method for use with a hand held wireless device for remote telephony call control, comprising the steps of:
a) coupling a call control server having call control and wireless network communication capabilities to one of a telephone or a PBX;
b) coupling a wireless network gateway/router to said call control server; and
c) utilizing said call control server to:
1) send a message to the hand held wireless device having call control capabilities and wireless network communication capabilities when a call is received; and
2) respond to messages from said hand held wireless device for processing the call.

27. A method for use with a call control server coupled to one of a telephone or a PBX and coupled to a wireless network, comprising the steps of utilizing said call control server to send a message to a hand held wireless device having call control capabilities and wireless network communication capabilities when a call is received; and respond to messages from said hand held wireless device for processing the call.
